(19) **Europäisches Patentamt / European Patent Office / Office européen des brevets**

(11) **EP 1 887 112 B1**

(12) **EUROPEAN PATENT SPECIFICATION**

(45) Date of publication and mention
of the grant of the patent:
**12.05.2010 Bulletin 2010/19**

(51) Int Cl.:
*D01F 9/08* (2006.01)         *D04H 1/72* (2006.01)
*D01D 5/00* (2006.01)         *D04H 3/03* (2006.01)

(21) Application number: **06747161.5**

(22) Date of filing: **30.05.2006**

(86) International application number:
**PCT/JP2006/311181**

(87) International publication number:
**WO 2006/129844 (07.12.2006 Gazette 2006/49)**

(54) **CERAMIC FIBER AND PROCESS FOR PRODUCING THE SAME**

KERAMIKFASER UND HERSTELLUNGSVERFAHREN DAFÜR

FIBRE CERAMIQUE ET SON PROCEDE DE PRODUCTION

(84) Designated Contracting States:
**AT BE BG CH CY CZ DE DK EE ES FI FR GB GR HU IE IS IT LI LT LU LV MC NL PL PT RO SE SI SK TR**

(30) Priority: **31.05.2005 JP 2005158937**
**31.05.2005 JP 2005158941**

(43) Date of publication of application:
**13.02.2008 Bulletin 2008/07**

(73) Proprietor: **TEIJIN LIMITED**
**Osaka-shi,**
**Osaka 541-0054 (JP)**

(72) Inventors:
• **KOMURA, Shinya,**
**c/o Teijin Ltd Iwakuni Res. Ctr**
**Iwakuni-shi,**
**Yamaguchi 740-0014 (JP)**

• **MIYOSHI, Takanori,**
**c/o Teijin Ltd Iwakuni Res. Ctr**
**Iwakuni-shi,**
**Yamaguchi 740014 (JP)**

(74) Representative: **Hallybone, Huw George**
**Carpmaels & Ransford**
**43-45 Bloomsbury Square**
**London WC1A 2RA (GB)**

(56) References cited:
**EP-A- 0 318 203         EP-A1- 0 826 647**
**EP-A1- 1 264 804        WO-A1-03/010379**
**WO-A1-2004/091785       WO-A1-2006/001403**
**JP-A- 2000 218 170      JP-A- 2004 298 728**
**US-A- 4 320 074         US-A1- 2003 134 121**

## Description

Technical Field

The present invention relates to a ceramic fiber and a method for producing the same. More particularly, the invention relates to a ceramic fiber useful for fillers, filters, photocatalytic filters and semiconducting materials excellent in heat resistance, and a method for producing the same.

Background Art

Ceramic fibers are a useful material to be used in such various fields as electrical insulating materials, heat insulating materials, fillers and filters, while taking advantages of such characteristics as electrical insulation, low thermal conductivity and high elasticity. Usual ceramic fibers are manufactured by a fusion method, a spindle method, a blowing method or the like, and the fiber diameter thereof is generally several micrometers (see, for example, Patent Document 1). Particularly in the field of fillers and filters, for the purpose of increasing adhesion area with a matrix material and improving the filter efficiency, there have been needs for thinner fibers.

On the other hand, there is known an electrospinning method as a method for manufacturing thinner fibers compared with conventional fibers, mainly in the field of materials consisting of organic polymer. The electrospinning method is a method in which, by applying a high voltage to a solution formed by dissolving a solute capable of forming a fiber such as an organic polymer, the solution is jetted toward an electrode and the solvent is evaporated to allow an extrafine fiber structure to be obtained simply (see, for example, Patent Document 2).

Further, a method for manufacturing ceramic fibers by the electrospinning method is known (see, for example, Patent Document 3). However; it is considered that the practice of stable fiber spinning is very difficult because the viscosity control of the solution by a sol-gel method is necessary in this method, and it is considered that the greater part of manufactured ceramic fibers is silica ingredient hot to allow the fibers to be used for such applications that require heat resistance.

Further, a process relates to the preparation of a shaped body having at least one dimension less than 100 microns and comprising alumina or an aluminium hydrate, and the aforementioned process wherein a fiber is formed, are known (see, for example, Patent document 4).

Further, also known is method for manufacturing a ceramic fiber constituted of a ceramic containing titanium oxide (titania fiber) among ceramic fibers by the electrospinning method (see, for example, Non-patent Documents 1 to 3). However, it is considered that, since the addition of organic polymer from 0.1 to 0.5 times the weight of titania raw material compound is necessary, the obtained titania fiber has a porous structure. The porous structure is considered to give a comparatively large surface area, and may be suitable for such application as a support member of a metal catalyst. But, porous titania fiber is considered to have low mechanical strength and may be difficult to be used for such application that requires strength. Further, the titania fiber having a porous structure is considered to have low crystallinity with a lot of lattice defects. If a lot of lattice defects are contained, since recombination between an electron and an electron hole occurs frequently, also photocatalyst activity is considered to be insufficient.

[Patent Document 1] JP-A-2003-105658
[Patent Document 2] JP-A-2002-249966
[Patent Document 3] JP-A-2003-73964
[Patent Document 4] US Patent No 4,320, 074
[Non-patent Document 1] Dan Li, Younan Xia, Direct Fabrication of Composite and Ceramic Hollow Nanofibers by Electrospinning, Nano Letters, US, The American Chemical Society, May, 2004, Vol. 4, No. 5, P933 - 938
[Non-patent Document 2] Mi Yeon Song, Do Kyun Kim, Kyo Jin Ihn, Seong Mu Jo, Dong Young Kim, Electrospun $TiO_2$ electrodes for dye-sensitized solar cells, Nanotechnology, US, Institute Of Physics, December 2004, Vol. 15, No. 12, P1861 - 1865

Disclosure of the Invention

The purpose of the present invention is to provide a ceramic fiber having excellent heat resistance, smooth surface and a small fiber diameter, and a method for producing the same.

That is, the purpose of the invention is achieved by a ceramic fiber according to claim 1 having an average fiber diameter of from 50 to 1000 nm, a fiber length of 100 $\mu$m or more, and a BET specific surface area of from 0.1 to 3 $m^2$/g.

In addition, another purpose of the invention is achieved by a method according to claim 7 for producing a ceramic fiber including the steps of dissolving a material to be ceramic after burning and a fiber-forming solute to form a solution, spinning a fiber by an electrospinning method from the solution containing the fiber-forming solute, obtaining a fiber structure accumulated on a collecting substrate by the fiber spinning, and burning the accumulated fiber structure.

Brief Description of the Drawings

Fig. 1 is a drawing schematically showing a production apparatus for producing the ceramic fiber of the present invention.
Fig., 2 is a photographic view obtained by shooting (x 400) the surface of the ceramic fiber obtained by the operation in Example 1 with a scanning electron microscope.

Fig. 3 is a photographic view obtained by shooting (x 2000) the surface of the ceramic fiber obtained by the operation in Example 1 with a scanning electron microscope.

Fig. 4 is a photographic view obtained by shooting (x 400) the surface of the ceramic fiber obtained by the operation in Example 2 with a scanning electron microscope.

Fig. 5 is a photographic view obtained by shooting (x 2000) the surface of the ceramic fiber obtained by the operation in Example 2 with a scanning electron microscope.

Fig. 6 is a photographic view obtained by shooting (x 400) the surface of the ceramic fiber obtained by the operation in Example 3 with a scanning electron microscope.

Fig. 7 is a photographic view obtained by shooting (x 2000) the surface of the ceramic fiber obtained by the operation in Example 3 with a scanning electron microscope.

Fig. 8 is an X-ray diffraction pattern of the ceramic fiber obtained by the operation in Example 3.

Fig. 9 is an X-ray diffraction pattern of a sample prepared by adding a high purity silicon powder for the X-ray diffraction standard to the ceramic fiber obtained by the operation in Example 3 as the internal standard.

Fig. 10 is an X-ray diffraction pattern of a sample prepared by adding a high purity silicon powder for the X-ray diffraction standard to the ceramic fiber obtained by the operation in Example 4 as the internal standard.

Best Mode for Carrying Out the Invention

Hereinafter, the present invention is detailed.
The ceramic fiber of the present invention is described in claim 1 and has an average fiber diameter of from 50 to 1000 nm, a fiber length of 100 $\mu$m or more, and a BET specific surface area of from 0.1 to 3 m$^2$/g.
Here, in the invention, the ceramic fiber means a fiber structure constituted of an inorganic solid material produced by heat treatment. Regarding the inorganic solid material, oxide, carbide, nitride, boride, silicide, fluoride, sulfide and the like can be mentioned, and oxide . (oxide-based ceramic) is preferred from the viewpoint of heat resistance and processability.
The oxides used in the present invention are $Al_2O_3$, $SiO_2$ and $TiO_2$, and compounds containing plurality of aforementioned compounds.
Among these, for the ceramic fiber of the invention, one containing aluminum is preferred from the viewpoint of heat resistance, wherein the component ratio thereof is preferably in an amount of from 20 to 100% by weight expressed in therms of $Al_2O_3$, more preferably from 40 to 100% by weight.
Further, the ceramic fiber of the invention is also preferably constituted of a ceramic containing titanium oxide. Here, regarding the crystal form of titanium oxide, there exist the anatase type, the rutile type and the brookite type, and the ceramic fiber of the invention is preferably constituted of the anatase type crystal. In the case where crystal forms other than the anatase type do not exist, the strength and, in addition, the activity as a photocatalyst of the ceramic fiber to be obtained are improved. Preferably, diffraction patterns other than that of the anatase type are not confirmed in the X-ray diffraction pattern of the ceramic fiber containing titanium oxide.
Further, regarding the abundance ratio between the anatase type crystal and the rutile type crystal in a ceramic fiber after such treatment of the ceramic fiber of the invention constituted of the ceramic containing titanium oxide under air atmosphere as increasing the atmospheric temperature from 20°C to 800°C at a temperature increasing rate of 1.3°C/min, maintaining the temperature at 800°C for two hours, and decreasing the temperature from 800°C to 20°C at a temperature decreasing rate of 1.3°C/min, in the X-ray diffraction pattern, the intensity of the peak for the rutile type crystal at 2θ = 27 - 28° is preferably from 0 to 10 when the intensity of the peak for the anatase type crystal at 2θ = 25 - 26° is defined as 100, more preferably from 0 to 5, further preferably from 0 to 1. Since the transition to the rutile type crystal scarcely occurs even after the retention at high temperatures, the crystallite size of the anatase type crystal can be made great. A great crystallite size means a crystal structure having a few defects to allow the recombination of a free electron and a hole (electron hole) inside the titanium oxide to be prevented, and a high photocatalyst effect to be exhibited. The crystallite size is preferably from 100 to 300 nm, more preferably from 100 to 250 nm, further preferably from 100 to 200 nm, furthermore preferably from 150 to 200 nm.
Incidentally, in the invention, the fiber constituted of a ceramic containing titanium oxide means a fiber structure composed of an oxide-based ceramic containing titanium oxide as the primary ingredient, and also includes fibers containing such an oxide-based ceramic as $Al_2O_3$, $SiO_2$, $Li_2O$, $Na_2O$, $MgO$, $CaO$, $SrO$, $BaO$, $B_2O_3$, $P_2O_5$, $SnO_2$, $ZrO_2$, $K_2O$, $Cs_2O$, $ZnO$, $Sb_2O_3$, $As_2O_3$, $CeO_2$, $V_2O_5$, $Cr_2O_3$, $MnO$, $Fe_2O_3$, $CoO$, $NiO$, $Y_2O_3$, $Lu_2O_3$, $Nb_2O_3$, $Er_2O_3$, $Yb_2O_3$ or $HfO_2$ as an accessory ingredient. The abundance ratio of these oxide-based ceramics other than titanium oxide is preferably 5% by weight or less relative to the weight of the ceramic fiber from the viewpoint of the crystallinity of the titanium oxide, more preferably 1% by weight or less, further preferably 0.1% by weight or less.
Next, the fact that the average fiber diameter of from 50 to 1000 nm is an indispensable condition is described. When the average fiber diameter of the ceramic fiber of the invention is greater than 1000 nm, the flexibility of the ceramic fiber becomes poor. In addition, when used also for a filler, the ceramic fiber having a small fiber diameter and a large specific surface area results in increase in the adhesion (contact) area with a matrix material, which is preferred. On the other hand, when the average fiber diameter is smaller than 50 nm, a too thin fiber may generate such problem as easy rupture, which is not preferred. The average fiber diameter is more preferably in the range of from 100 to 600 nm, further preferably in the range of from 100 to 500 nm.

Next, the fact that the fiber length of 100 $\mu$m or more is an indispensable condition is described. When a fiber length of the ceramic fiber of the invention is less than 100 $\mu$m, the mechanical strength of a ceramic fiber aggregate obtained by the ceramic fiber becomes insufficient. The fiber length is preferably 150 $\mu$m or more, more preferably 1 mm or more.

Next, the fact that the BET specific surface area of from 0.1 to 3 m$^2$/g is an indispensable condition is described. The BET specific surface area of the ceramic fiber of the invention more than 10 m$^2$/g shows that the ceramic fiber surface has a porous structure, and the porous structure lowers the strength of the ceramic fiber. On the other hand, in the case where it is less than 0.1 m$^2$/g, the adhesiveness with a matrix lowers when the ceramic fiber of the invention is used for a filler, or a photocatalyst activity lowers when it is used for a photocatalytic filter, which is not preferred.

Next, embodiments for producing the ceramic fiber of the invention are described.

Firstly, in order to produce the ceramic fiber of the invention, any technique that gives a ceramic fiber satisfying simultaneously the aforementioned conditions can be adopted, and, as a preferred embodiment, there can be mentioned a method for producing the fiber structure including the steps of dissolving a material to be ceramic after burning and a fiber-forming solute to form a solution, spinning a fiber from the solution containing the fiber-forming solute by an electrospinning, obtaining a fiber structure accumulated on a collecting substrate by the fiber spinning; and burning the accumulated fiber structure.

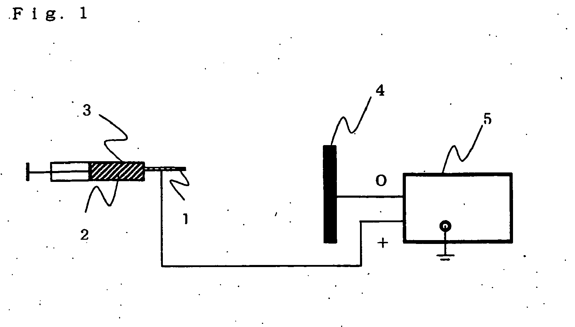

Hereinafter, more specific description is given using Fig. 1.

By providing at the tip portion of a solution-holding tank in a syringe tube figure (3 in Fig 1) with a solution-jetting nozzle in a needle figure (1 in Fig. 1) to which voltage has been applied with a suitable means, for example, a high-voltage generator (5 in Fig. 1) to guide the solution (2 in Fig. 1) to the tip portion of the solution-jetting nozzle. By arranging the tip portion of the solution-jetting nozzle (1 in Fig. 1) at a suitable interval from an earthed fibrous material-collecting electrode (4 in Fig. 1), and by jetting the solution (2 in Fig. 1) from the tip portion of the solution-jetting nozzle (1 in Fig. 1), it is possible to form a fibrous material between the tip portion of the nozzle and the fibrous material-collecting electrode (4 in Fig. 1).

Here, the diameter of the fiber spinning nozzle is in the range of from 50 to 1000 $\mu$m. The nozzle is not limited to one, but multiple nozzles of two or more may be used. The material quality of the nozzle may be metal or nonmetal.

A metal nozzle can also be used as an electrode, and even a nonmetal one may be used for applying voltage by arranging an electrode inside the nozzle. By increasing the number of the nozzles, since the supply rate of the solution is increased, the productivity can be improved considerably. The interval between electrodes depends on the charge amount, the nozzle size, the jet volume of the solution from the nozzle, the solution concentration and the like, and an interval of from 5 to 20 cm was appropriate when around 10 kV was applied. The electrostatic potential to be applied is generally from 3 to 100 kV, preferably from 5 to 50 kV, further preferably from 5 to 35 kV. An intended potential may be generated by any suitable conventionally known method.

The above-mentioned two embodiments show the case where the electrode also works as the collecting substrate. But, it is also possible to set up a member capable of working as a collecting substrate between electrodes to arrange the collecting substrate differing from the electrode and to collect there a fiber laminated body. On this occasion, by setting up, for example, a belt-shaped material between electrodes and using it as a collecting substrate, continuous production also becomes possible.

Incidentally, since a preferred production embodiment varies depending on a case where a ceramic fiber contains aluminum oxide in an amount of from 20 to 100% by weight expressed in terms of Al$_2$O$_3$, and a case where it is constituted of a ceramic containing titanium oxide, each of the cases is described.

Firstly, in order to produce a ceramic fiber containing aluminum oxide in an amount of from 20 to 100% by weight expressed in terms of Al$_2$O$_3$, any technique can be adopted when it can give a ceramic fiber that satisfies simultaneously the aforementioned conditions, and there can be mentioned such a production method that includes the steps of dissolving a fiber-forming solute in an aqueous solution containing a water-soluble aluminum chloride, spinning a fiber from the aqueous solution containing the fiber-forming solute by an electrospinning method, obtaining a fiber structure accumulating on the collecting substrate by the fiber spinning, and burning the accumulated fiber structure, as one preferred embodiment.

The above production method is described more specifically.

Firstly, the aqueous solution containing a water-soluble aluminum chloride is described. Here, regarding a compound contained in the aqueous solution containing a water-soluble aluminum chloride, any one that exhibits solubility in water and forms oxide-based ceramics by a subsequent burning process can be used, and, for example, hydroxide, fluoride, chloride, bromide, iodide, sulfate, persulfate, nitrite, nitrate, carbonate, chlorate, perchlorate, phosphate, pyrophosphate, borate, sulfamate, periodate, acetate, ammonium salt and the like can be mentioned as representative compounds.

Regarding the aluminum chloride, an aluminum chloride having a solubility of from 50 to 500 parts by weight relative to 100 parts by weight of water is preferred, including, for example, basic aluminum chloride. The basic aluminum chloride is a compound represented by a formula $Al(OH)_{3-x}Cl_x$, in which the value of X can be controlled according to need and is preferably from 0.3 to 1.5 from the viewpoint of the solubility in water and the like.

A compound other than the aluminum chloride may be added if it does not significantly lower the strength and heat resistance of the ceramic fiber of the invention, and compounds containing silicon can be mentioned as the representative compound. Regarding the compound containing silicon, water-soluble silicon compounds formed from alkyl silicate are preferred and can be formed by partially hydrolyzing alkyl silicate in water. Regarding the alkyl silicate used here, tetramethoxysilane, tetraethoxysilane, tetrapropoxysilane, tetraisopropoxysilane, tetrabutoxysilane and the like can be mentioned. Among these, since it is preferred that a less amount of alcohol is generated as the result of the hydrolysis reaction from the viewpoint of the stability of the fiber spinning, tetramethoxysilane and tetraethoxysilane that generate a little amount of alcohol are more preferred.

The acidity of water that subjects the alkyl silicate to hydrolysis reaction is not limited when it can hydrolyze the alkyl silicate to change it into a water-soluble silicon compound, but, since it is necessary to inhibit condensation reaction other than the hydrolysis, an acidity that leads to mild condensation reaction is preferred, and is more preferably from pH 2 to 4.

Regarding the volume of water to be reacted with the alkyl silicate, the weight ratio of water relative to the alkyl silicate is from 0.5 to 2 from the viewpoint of the stability of a hydrolyzed compound and the stability of a subsequent fiber spinning process.

Next, temperature at which the alkyl silicate is reacted with water is described. Temperature at which the alkyl silicate is reacted with water is not particularly limited if the hydrolysis reaction of the alkyl silicate can change it into a water-soluble compound, but, also for the purpose of inhibiting the acceleration of condensation reaction, no heating is preferred. More preferably, the reaction is conducted at room temperature (25°C).

Next, the step of dissolving the fiber-forming solute is described. In order to produce the ceramic fiber of the invention, a fiber-forming solute is preferably dissolved in order to give spinnability to the solution. Regarding the fiber-forming solute, there is no particular limitation if the ceramic fiber of the invention is produced, but, from the viewpoint of handling ability and the necessity of being removed by burning, organic polymer is preferred.

Examples thereof include polyethylene oxide, polyvinyl alcohol, polyvinyl ester, polyvinyl ether, polyvinylpyridine, polyacrylamide, ether cellulose, pectin, starch, polyvinyl chloride, polyacrylonitrile, polylactic acid, polyglycolic acid, polylactic acid-polyglycolic acid copolymer, polycaprolactone, polybutylene succinate, polyethylene succinate, polystyrene, polycarbonate, polyhexamethylene carbonate, polyarylate, polyvinyl isocyanate, polybutyl isocyanate, polymethyl methacrylate, polyethyl methacrylate, poly(n-propyl methacrylate), poly(n-butyl methacrylate), polymethyl acrylate, polyethyl acrylate, polybutyl acrylate, polyethylene terephthalate, polytrimethylene terephthalate, polyethylene naphthalate, poly(p-phenylene terephthalamide), poly (p-phenylene terephthalamide)-3,4'-oxydiphenylene terephthalamide copolymer, poly(m-phenylene isophthalamide), cellulose diacetate, cellulose triacetate, methyl cellulose, propyl cellulose, benzyl cellulose, fibroin, natural rubber, polyvinyl acetate, polyvinyl methyl ether, polyvinyl ethyl ether, polyvinyl n-propyl ether, polyvinyl isopropyl ether, polyvinyl n-butyl ether, polyvinyl isobutyl ether, polyvinyl tert-butyl ether, polyvinylidene chloride, poly(N-vinyl pyrrolidone), poly(N-vinylcarbazole), poly(4-vinylpyridine), polyvinyl methyl ketone, polymethyl isopropenyl ketone, polypropylene oxide, polycyclopentene oxide, polystyrene sulfone, nylon 6, nylon 6 6 , nylon 11, nylon 12, nylon 610 and nylon 612, and copolymers thereof.

Among these, from the viewpoint of solubility in water, polyethylene oxide, polyvinyl alcohol, polyvinyl ester, polyvinyl ether, polyvinylpyridine, polyacrylamide, ether cellulose, pectin and starch are preferably used, and polyethylene glycol is especially preferred.

The molecular weight of the organic polymer is also not particularly limited if only the ceramic fiber of the invention is produced, but, since the addition volume of the organic polymer increases when the molecular weight is small to increase the amount of gas generated by the burning, the risk of the occurrence of the defect in the ceramic fiber construction becomes high, which is not preferred. The molecular weight is preferably from 100, 000 to 10, 000, 000, more preferably in the range of from 100,000 to 8,000,000, particularly preferably from 100,000 to 600,000.

The most preferred material as the fiber-forming solute is polyethylene glycol having a molecular weight of from 100,000 to 10,000,000.

Incidentally, regarding the addition amount of the fiber-forming solute, an amount as small as possible within a concentration range that allows the fiber to be formed is preferred from the viewpoint of improving the denseness of the ceramic fiber, and an amount in the range of form 0.01 to 5% by weight is preferred, and from 0.01 to 2% by weight is more preferred.

Next, a solvent used for the solution for producing the ceramic fiber of the invention is described. In the invention, water is used for the solvent, but the addition of a solvent other than water, for example alcohols, ketones, amines, amides and carboxylic acids, to the solution is also possible from the viewpoint of improving the stability of the solution and improving the stability of the fiber spinning, or the addition of such salt as ammonium chloride is also possible.

Next, the electrospinning method is described. The ceramic fiber of the invention is produced by an electrospinning method, wherein the electrospinning method means a method for obtaining a fiber structure by jetting a solution in which a fiber-forming solute has been dissolved in an electrostatic field formed between electrodes, thread-trailing the solution toward the electrode, and accumulating the formed fibrous material on a collecting substrate. The fibrous material shows not only a state where a fiber laminate is formed by the distillation of the solvent dissolving the fiber-forming solute, but also a state where the solvent is contained in a fibrous material.

Usual electrospinning is conducted at room temperature, but in such a case that the volatilization of the solvent is insufficient, it is also possible to control the temperature of a fiber-spinning atmosphere, or control the temperature of a collecting substrate according to need.

Next, an apparatus for use in the electrospinning method is described.

For the aforementioned electrode, any of metals, inorganic materials and organic materials can be used if only it exhibits electroconductivity, and also insulators provided thereon with a thin film of a metal, an inorganic material or an organic material exhibiting electroconductivity are also usable.

The electrostatic field is formed between a pair of or a plurality of electrodes, and high voltage may be applied to any of the electrodes. This is intended to include a case where total three electrodes, for example, two high voltage electrodes having different voltage values from each other (for example, 15 kV and 10 kV) and an electrode connected to earth, and a case where more than three electrodes are used.

Next, the step of obtaining a fiber structure accumulating on a collecting substrate is described.

In the production method of the invention, the fiber spinning is conducted by an electrospinning, therefore the fiber structure is laminated on the collecting substrate being an electrode. The use of a flat surface as the collecting substrate gives flat nonwoven fabric and, by varying the figure of the collecting substrate, a structure having an intended figure can also be formed.

Further, in the case where the uniformity is low such that the fiber structure is concentrated and laminated upon one part of a substrate, it is also possible to oscillate or rotate the substrate.

Next, the step of burning the fiber structure is described. The burning of the fiber structure having been produced by a fiber spinning is necessary for producing the ceramic fiber of the invention. For the burning, common electric furnaces can be used, and an electric furnace capable of substituting the burning atmosphere may also be used according to need. The burning temperature is 600°C or more for the purpose of producing a ceramic fiber excellent in heat resistance, but the burning at 1400°C or more leads to largely grown grains in the ceramic fiber and the melting of low-melting materials to lower the mechanical strength, which is not preferred. More preferred burning temperature is from 800°C to 1200°C.

Then, in order to produce the ceramic fiber constituted of a ceramic containing titanium oxide, any technique that can give a ceramic fiber satisfying simultaneously the aforementioned condition can be adopted. As a preferred embodiment, such a method for producing a ceramic fiber can be mentioned that includes the steps of forming a solution composed of a mixture of a compound that forms a complex with alkyl titanate and alkyl titanate, water and a fiber-forming solute, spinning fiber from the solution by an electrospinning method, accumulating a fiber structure obtained by the fiber spinning, and burning the accumulated fiber structure.

Firstly, the step of forming a solution composed of a mixture of a compound that forms a complex with alkyl titanate and alkyl titanate, water and.a fiber-forming solute is described.

Regarding alkyl titanate used here, titanium tetramethoxide, titanium tetraethoxide, titanium tetra-n-propoxide, titanium tetraisopropoxide, titanium tetra-n-butoxide, titanium tetra-tert-butoxide and the like can be mentioned, and titanium tetraisopropoxide and titanium tetra-n-butoxide are preferred because they can be gotten easily.

Next, a compound that forms a complex with alkyl titanate is described. Regarding compounds that form a complex with alkyl titanate, such coordinative compounds as carboxylic acids, amides, esters, ketones, phosphines, ethers, alcohols and thiols can be mentioned.

In the invention, since it is necessary to react a mixture of a compound that forms a complex with alkyl titanate and alkyl titanate with water, a compound that forms a complex as stable as not exhibiting reactivity with water at ordinary temperature is not preferred. Accordingly, carboxylic acids are preferred, aliphatic carboxylic acids are more preferred, and acetic acid is further preferred.

The addition amount of the compound that forms a complex with alkyl titanate is not particularly limited if only it is an amount capable of forming the solution for producing the ceramic fiber of the invention, and is preferably 5 equivalent weights or more relative to alkyl titanate, more preferably from 7 to 10 equivalent weights.

In the invention, a transparent solution is formed by dissociating gel generated by the reaction of a mixture of a compound that forms a complex with alkyl titanate and alkyl titanate with water.

It is not preferred that the concentration of water becomes high locally when the water is added, because the generation of a gel that hardly dissociates may occur. Accordingly, gradual addition of water to a stirred solution is preferred. Regarding the step of dissociating the generated gel, by further continuing the stirring, the gel can be dissociated. By dissociating the gel, a transparent solution can be prepared.

The addition amount of water is not particularly limited if only the solution for producing the ceramic fiber of the invention can be formed, and is preferably from 0.5 to 3 times the weight of alkyl titanate, more preferably from 0.5 to 1.5 times.

Incidentally, the type of the fiber-forming solute, the addition amount, the solvent used for the solution for producing the fiber and the electrospinning method may be determined in the same way as in the aforementioned case where the ceramic fiber containing aluminum oxide in an amount of from 20 to 100% by weight expressed in terms of $Al_2O_3$ is produced.

Regarding the step of burning the fiber structure obtained by the electrospinning method, the burning temperature is preferably from 300 to 1050°C for the purpose of sufficient growth of the anatase type crystal and the inhibition of transition to the rutile type crystal. It is more preferably from 400 to 1000°C, further preferably from 500 to 900°C.

The temperature-increasing rate at the burning is preferably from 1 to 10°C/min. If the rate is less than 1°C/min, a lot of time is required to increase the temperature, which is not preferred from the viewpoint of productivity. On the other hand, if the rate is more than 10°C/min, the anatase type crystal of the ceramic fiber may not grow sufficiently, or transition to the rutile type crystal may occur, which is not preferred.

Examples ,

Hereinafter, the present invention is described on the basis of Examples, but the present invention is not limited to these Examples. Following respective items in Examples and Comparative Examples are evaluated according to the following techniques.

Average fiber diameter:

From a photographic picture obtained by shooting (magnification: × 2000) the surface of the obtained ceramic fiber with a scanning electron microscope (S-2400, by Hitachi), 20 portions were selected at random and the diameter of respective filaments was measured, then by calculating the average value of all fiber diameters (n = 20), the average fiber diameter of the ceramic fiber was given.

Check of the existence of fibers having fiber length of 100 μm or less:

By observing a photographic picture obtained by shooting (magnification: × 400) the surface of the obtained ceramic fiber with a scanning electron microscope (S-2400, by Hitachi), the existence of fibers having fiber length of 100 μm or less was checked.

BET specific surface area:

The BET specific surface area of the obtained ceramic fiber was measured by the BET method using nitrogen gas.

X-ray diffraction:

For the X-ray diffraction measurement, ROTAFLEX RU200B (by Rigaku Denki) was used, and a reflection method was adopted with a goniometer having a radius of 185 nm. X-rays were made monochromatic with a monochrometer to give CuKα ray. For the measurement sample, one prepared by adding a high purity silicon powder for the X-ray diffraction standard to the obtained ceramic fiber as the internal standard was used.

Crystallite size:

The obtained X-ray diffraction profile was subjected to intensity correction, and the diffraction angle 2θ was corrected based on the 111 diffraction peak of the internal standard silicon. On this occasion, the half-width of the 111 diffraction peak of silicon was 0.15° or less. By using a diffraction peak appeared near 25.3° for the corrected X-ray diffraction profile, crystallite size was calculated with the following Scherrer formula. The diffraction peaks of titanium oxide and silicon in the range of 2θ = 24 - 30° are not separated into a peak derived from CuKα1 and one derived from Kα2, and all were treated as the peak derived from Cukα.

**[Formula 1]**

$$D = K \times \lambda/\beta\cos\theta$$

D: crystallite size;
λ: measuring X-ray wave length;
β: broadening of a diffraction line depending on the crystallite size;
θ: Bragg angle of a diffraction peak;
K: form factor (Scherrer constant)

Here, for β, a value (β = B - b) obtained by subtracting the half-width b of the 111 diffraction peak of the internal standard silicon from the half-width B of the diffraction peak of titanium oxide that appears near 25. 3° was adopted in order to correct the broadening of an optical system, and it was determined that K = 1 and λ = 0.15418 nm.

Example 1

A basic aluminum chloride aqueous solution (trade name: Alfine 83, content in terms of $Al_2O_3$: 23.3

wt %, basicity: 83.1 wt %, by TAIMEI Chemicals) and polyethylene oxide (average molecular weight: 200,000, by Sigma-Aldrich) were mixed to prepare a solution for fiber spinning that contained polyethylene oxide in 1 wt %. From the solution for fiber spinning, a fiber structure was produced with an apparatus as shown in Fig. 1. The inner diameter of the jetting nozzle 1 was 0.4 mm, the voltage was 15 kV, and the interval from the jetting nozzle 1 to the electrode 4 was 15 cm.

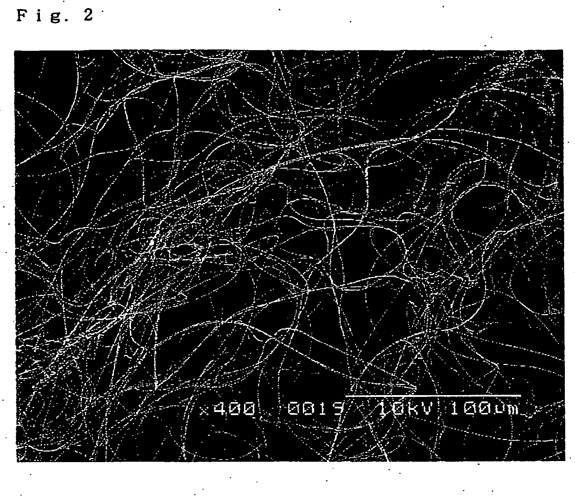

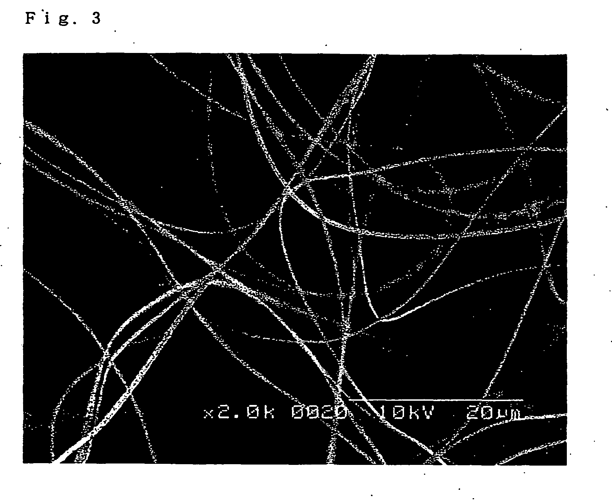

The temperature of the obtained fiber structure was raised up to 1150°C over 1.8 hours with an electric furnace under air atmosphere, and subsequently the temperature was maintained at 1150°C for 2 hours to produce a ceramic fiber. When the obtained ceramic fiber was observed with an electron microscope, the fiber diameter was 450 nm, and fibers having a fiber length of 100 $\mu$m or less were not observed. The BET specific surface area was 1.21 $m^2$/g. Pictures of the obtained ceramic fiber shot with an electron microscope are shown in Figs. 2 and 3.

Example 2

To 1 part by weight of tetraethyl orthosilicate (by Wako Pure Chemical Industries), 1 part by weight of an aqueous sulfuric acid solution having been adjusted to pH 3 was added.
The solution to which the aqueous sulfuric acid solution was added showed phase separation just after the addition, but, by stirring the same intensively at room temperature, it was compatibilized. To the compatibilized solution, a basic aluminum chloride aqueous solution (trade name: Alfine 83, content in terms of $Al_2O_3$: 23.3 wt %, basicity: 83.1 wt %, by TAIMEI Chemicals) and polyethylene oxide (average molecular weight: 200,000, by Sigma-Aldrich) were mixed to prepare a solution for fiber spinning that had the mixture ratio of silicon and aluminum of 1/1 (weight ratio) in terms of $SiO_2/Al_2O_3$, and contained polyethylene oxide in 1 wt % . From the solution for fiber spinning, a fiber structure was produced with an apparatus as shown in Fig. 1. The inner diameter of the jetting nozzle 1 was 0.4 mm, the voltage was 15 kV, and the interval from the jetting nozzle 1 to the electrode 4 was 15 cm. The temperature of the obtained fiber structure was raised up to 1150°C over 1.8 hours with an electric furnace under air atmosphere, and subsequently the temperature was maintained at 1150°C for 2 hours to produce ceramic fiber.

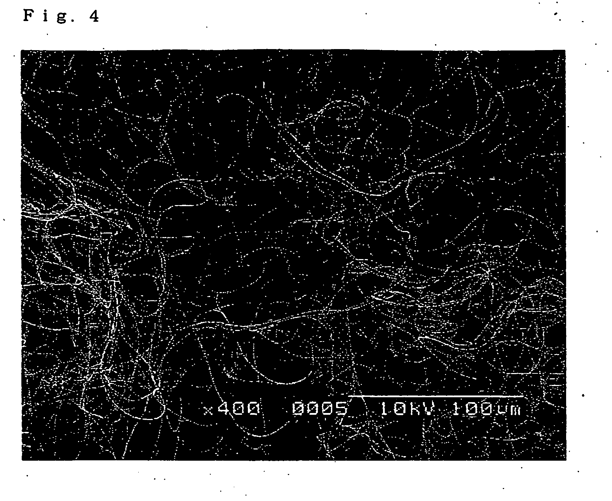

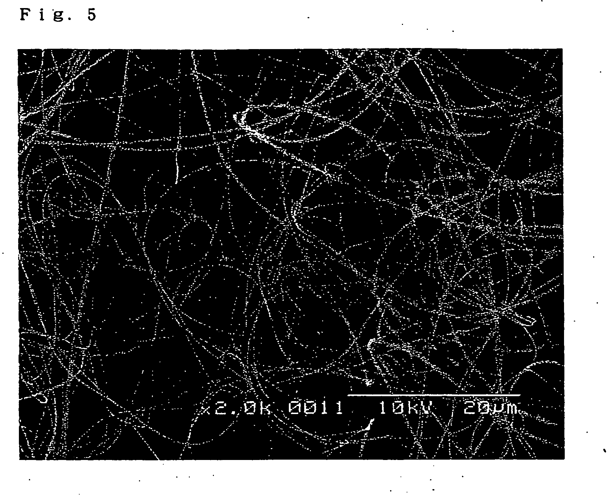

When the obtained ceramic fiber was observed with an electron microscope, the fiber diameter was 280 nm, and fibers having a fiber length of 100 $\mu$m or less were not observed. The BET specific surface area was 1.89 $m^2$/g. Pictures of the obtained ceramic fiber shot with an electron microscope are shown in Figs. 4 and 5.

Example 3

To 1 part by weight of titanium tetra-n-butoxide (first grade, by Wako Pure Chemical Industries), 1.23 parts by weight of acetic acid (guaranteed grade, by Wako Pure Chemical Industries) was added to give a uniform solution. To the solution, 1 part by weight of ion-exchanged water was added with stirring to generate a gel in the solution. The generated gel was dissociated by further continuing the stirring, and a transparent solution could be prepared.

To the prepared solution, 0.016 part by weight of polyethylene glycol (first grade, average molecular weight 300,000 - 500, 000, by Wako Pure Chemical Industries) was mixed to prepare a fiber spinning solution. From the fiber spinning solution, a fiber structure was produced with an apparatus as shown in Fig. 1. The inner diameter of the jetting nozzle 1 was 0.4 mm, the voltage was 15 kV, and the interval from the jetting nozzle 1 to the electrode 4 was 15 cm.

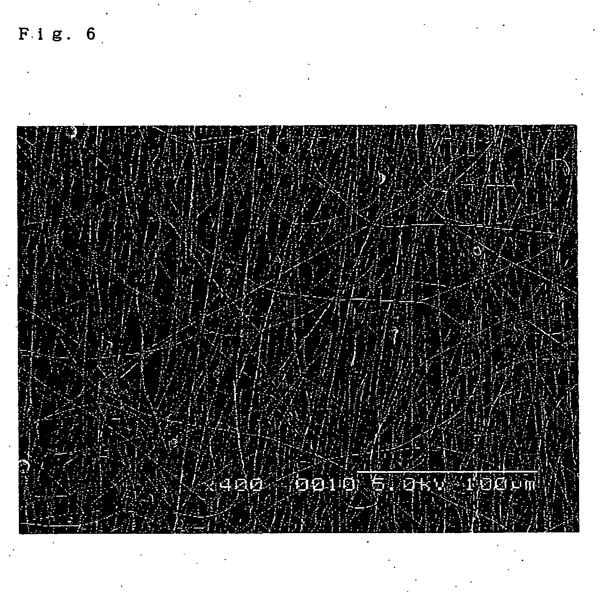

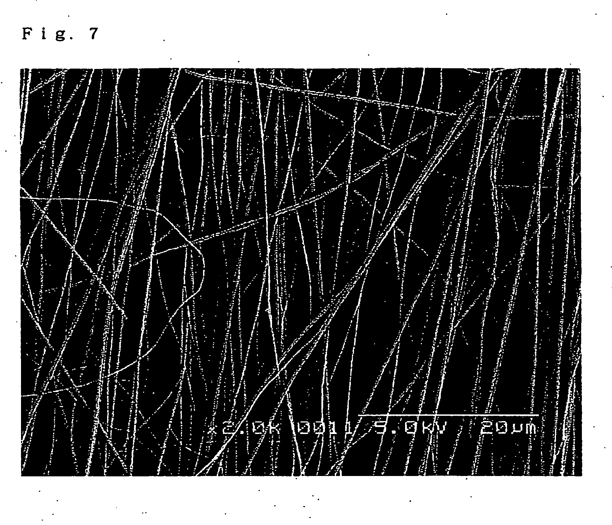

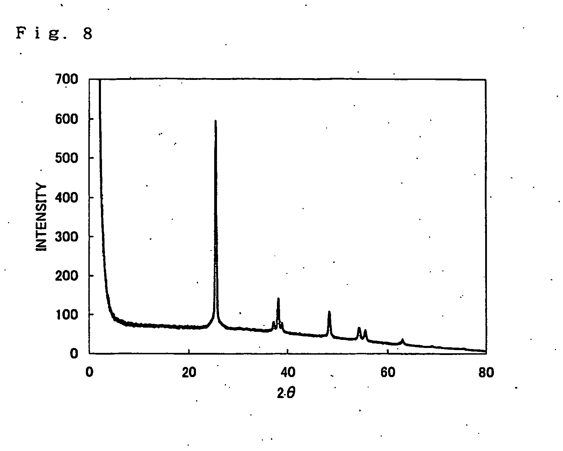

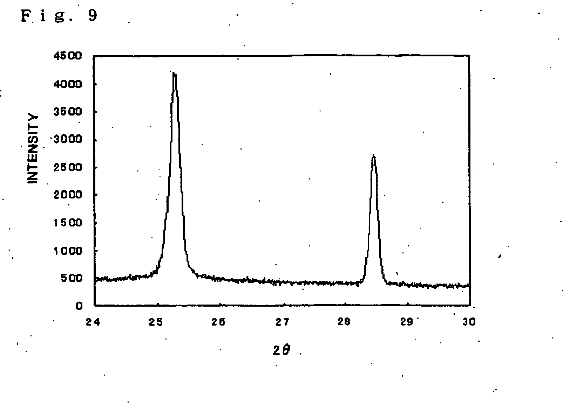

The temperature of the obtained fiber structure was raised up to 600°C over 10 hours with an electric furnace under air atmosphere, and subsequently the temperature was maintained at 600°C for 2 hours to produce a ceramic fiber. When the obtained ceramic fiber was observed with an electron microscope, the fiber diameter was 300 nm, and fibers having a fiber length of 100 $\mu$m or less were not observed. The BET specific surface area was 0.35 $m^2$/g. From the fact that a sharp peak was recognized at $2\theta = 25.3°$ in the result of X-ray diffraction of the obtained ceramic fiber, it was confirmed that the anatase type crystal is formed. Further, from the X-ray diffraction pattern, the crystallite size of the anatase type crystal was calculated to give 169.2 nm. Pictures of the obtained ceramic fiber observed with an electron microscope are shown in Figs. 6 and 7, and the X-ray diffraction pattern is shown in Fig. 8. In addition, the X-ray diffraction pattern of a sample prepared by adding a high purity silicon powder for X-ray diffraction standard to the obtained ceramic fiber as the internal standard is shown in Fig. 9.

Example 4

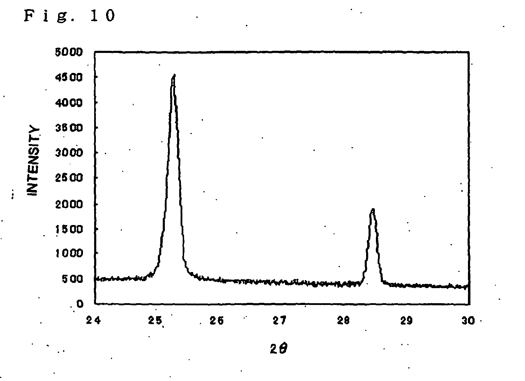

The temperature of the ceramic fiber produced in Example 3 was raised from 20°C to 800°C under air atmosphere by raising the atmospheric temperature at a temperature-increasing rate of 1.3°C/min, and, after maintaining the temperature at 800°C for 2 hours, it was lowered from 800°C to 20°C at a temperature-decreasing rate of 1.3°C/min. The ceramic fiber having been held at the high temperature was subjected to X-ray diffraction measurement to give such results that the crystallite size of the anatase type crystal was 182.5 nm, and that, when defining the intensity of the peak for the anatase type crystal at $2\theta = 25 - 26°$ as 100, no peak for the rutile type crystal at $2\theta = 27 - 28°$ was observed to give the relative intensity of 0. The X-ray diffraction pattern of the sample prepared by adding a high purity silicon powder for X-ray diffraction standard to the above-mentioned ceramic fiber as the internal standard is shown in Fig. 10.

## Claims

1. A ceramic fiber which is a fiber structure constituted of any one or more of $Al_2O_3$, $SiO_2$ and $TiO_2$ and has an average fiber diameter of from 50 to 1000 nm, a fiber length of 100 $\mu$m or more, and a BET specific surface area of from 0.1 to 3 $m^2$/g.

2. The ceramic fiber according to claim 1, comprising aluminum oxide in an amount of from 20 to 100% by weight expressed in terms of $Al_2O_3$.

3. The ceramic fiber according to claim 1 constituted of a ceramic comprising titanium oxide.

4. The ceramic fiber according to claim 3, wherein the titanium oxide is constituted of the anatase type crystal.

5. The ceramic fiber according to claim 4, wherein the abundance ratio of the anatase type crystal and the rutile type crystal in a ceramic fiber having been subjected to such treatment under air atmosphere as raising the atmospheric temperature from 20°C to 800°C at a temperature increasing rate of 1.3°C/min, maintaining the temperature at 800°C for 2 hours, and then lowering the temperature from 800°C to 20°C at a temperature decreasing rate of 1.3°C/min is so represented that the peak intensity for the rutile type crystal at $2\theta = 27 - 28°$ is from 0 to 10 when the peak intensity for the anatase type crystal at $2\theta = 25 - 26°$ is defined as 100, in the X-ray diffraction pattern thereof.

6. The ceramic fiber according to claim 4, wherein the crystallite size of the anatase type crystal is from 100 to 300 nm.

7. A method for producing a ceramic fiber described in claim 2, comprising the steps of dissolving a fiber-forming solute in an aqueous solution comprising a water-soluble aluminum chloride, spinning a fiber from the aqueous solution comprising the fiber-forming solute by an electrospinning method using a fiber spinning nozzle having a diameter in the range of from 50 to 1000$\mu$m, obtaining a fiber structure accumulated on a collecting substrate by the fiber spinning, and burning the accumulated fiber structure at the burning temperature which is 600°C or more and less then 1400°C.

8. The method for producing a ceramic fiber as described in claim 7, wherein the fiber-forming solute is an organic polymer having a molecular weight of from 10,000 to 10,000,000.

9. The method for producing a ceramic fiber according to claim 8, wherein the organic polymer is polyethylene glycol.

10. The method for producing a ceramic fiber according to claim 7, wherein the aqueous solution comprising the water-soluble aluminum chloride further comprises a water-soluble silicon compound.

11. The method for producing a ceramic fiber according to claim 10, wherein the water-soluble silicon compound is a compound obtained by partially hydrolyzing alkyl silicate.

12. The method for producing a ceramic fiber described in claim 3, comprising the steps of producing a solution composed of a mixture of a compound that forms a complex with alkyl titanate and alkyl titanate, water and a fiber-forming solute, spinning a fiber from the solution by an electrospinning method, accumulating a fiber structure obtained by the fiber spinning, and burning the accumulated fiber structure.

13. The method for producing a ceramic fiber according to claim 12, wherein the step of producing the solution is a step of producing a solution by dissociating a gel generated by reacting the mixture of a compound that forms a complex with alkyl titanate and alkyl titanate with water.

14. The method for producing a ceramic fiber according to claim 12, wherein the fiber-forming solute is an organic polymer.

15. The method for producing a ceramic fiber according to claim 14, wherein the organic polymer is polyethylene glycol.

16. The method for producing a ceramic fiber according to claim 12, wherein the compound that forms a complex with alkyl titanate is carboxylic acids.

17. The method for producing a ceramic fiber according to claim 16, wherein the carboxylic acids are acetic acid.

## Patentansprüche

1. Keramikfaser, die eine Faserstruktur ist, welche aus einem oder mehreren von $Al_2O_3$, $SiO_2$ und $TiO_2$ gebildet ist, und die einen durchschnittlichen Faserdurchmesser von 50 bis 1000 nm, eine Faserlänge von 100 $\mu$m oder mehr und eine BET spezifische Oberfläche von 0,1 bis 3 $m^2$/g aufweist.

2. Keramikfaser nach Anspruch 1, die Aluminiumoxid in einer Menge von 20 bis 100 Gewichtsprozent, angegeben in Form von $Al_2O_3$, umfasst.

**3.** Keramikfaser nach Anspruch 1, die aus einer Keramik gebildet ist, die Titanoxid umfasst.

**4.** Keramikfaser nach Anspruch 3, wobei das Titanoxid aus dem Anatas-Typ-Kristall gebildet ist.

**5.** Keramikfaser nach Anspruch 4, wobei das Häufigkeitsverhältnis des Anatas-Typ-Kristalls und des Rutil-Typ-Kristalls in einer Keramikfaser, die einer solchen Behandlung unter Luftatmosphäre unterzogen worden ist, wie das Erhöhen der Atmosphärentemperatur von 20°C auf 800°C bei einer Temperaturerhöhungsrate von 1,3°C/min, das Beibehalten der Temperatur bei 800°C für 2 Stunden, und anschließend das Erniedrigen der Temperatur von 800°C auf 20°C bei einer Temperaturerniedrigungsrate von 1,3°C/min, so in dem Röntgenbeugungsdiagramm davon dargestellt ist, dass die Peakintensität für den Rutil-Typ-Kristall bei $2\theta = 27 - 28°$ von 0 bis 10 beträgt, wenn die Peakintensität für den Anatas-Typ-Kristall bei $2\theta = 25 - 26°$ als 100 definiert ist.

**6.** Keramikfaser nach Anspruch 4, wobei die Kristallitgröße des Anatas-Typ-Kristalls von 100 bis 300 nm beträgt.

**7.** Verfahren zur Herstellung einer Keramikfaser nach Anspruch 2, umfassend die Schritte des Auflösens einer faserbildenden Beimengung in einer wässrigen Lösung, umfassend ein wasserlösliches Aluminiumchlorid, des Spinnens einer Faser aus der wässrigen Lösung, die die faserbildende Beimengung umfasst, durch ein Verfahren des Elektrospinnens unter Verwendung einer Faser-Spinndüse mit einem Durchmesser in dem Bereich von 50 bis 1000 $\mu$m, des Erhaltens einer Faserstruktur, die auf einem Sammelsubstrat durch das Faserspinnen angesammelt wird, und des Brennens der angesammelten Faserstruktur bei einer Brenntemperatur, die 600°C oder mehr und weniger als 1400°C beträgt.

**8.** Verfahren zur Herstellung einer Keramikfaser nach Anspruch 7, wobei die faserbildende Beimengung ein organisches Polymer mit einem Molekulargewicht von 10.000 bis 10.000.000 ist.

**9.** Verfahren zur Herstellung einer Keramikfaser nach Anspruch 8, wobei das organische Polymer Polyethylenglycol ist.

**10.** Verfahren zur Herstellung einer Keramikfaser nach Anspruch 7, wobei die wässrige Lösung, umfassend das wasserlösliche Aluminiumchlorid, weiter eine wasserlösliche Siliciumverbindung umfasst.

**11.** Verfahren zur Herstellung einer Keramikfaser nach Anspruch 10, wobei die wasserlösliche Siliciumverbindung eine Verbindung ist, die durch partielles Hydrolysieren von Alkylsilicat erhalten wird.

**12.** Verfahren zur Herstellung einer Keramikfaser nach Anspruch 3, umfassend die Schritte des Herstellens einer Lösung, zusammengesetzt aus einem Gemisch einer Verbindung, die einen Komplex mit Alkyltitanat bildet, und Alkyltitanat, Wasser und einer faserbildenden Beimengung, des Spinnens einer Faser aus der Lösung durch ein Verfahren des Elektrospinnens, des Ansammelns einer Faserstruktur, die durch das Faserspinnen erhalten wird, und des Brennens der angesammelten Faserstruktur.

**13.** Verfahren zur Herstellung einer Keramikfaser nach Anspruch 12, wobei der Schritt des Herstellens der Lösung ein Schritt des Herstellens einer Lösung durch Dissoziieren eines Gels ist, das durch Umsetzen des Gemisches einer Verbindung, die einen Komplex mit Alkyltitanat bildet, und Alkyltitanat mit Wasser erzeugt wird.

**14.** Verfahren zur Herstellung einer Keramikfaser nach Anspruch 12, wobei die faserbildende Beimengung ein organisches Polymer ist.

**15.** Verfahren zur Herstellung einer Keramikfaser nach Anspruch 14, wobei das organische Polymer Polyethylenglycol ist.

**16.** Verfahren zur Herstellung einer Keramikfaser nach Anspruch 12, wobei die Verbindung, die einen Komplex mit Alkyltitanat bildet, Carbonsäuren ist.

**17.** Verfahren zur Herstellung einer Keramikfaser nach Anspruch 16, wobei die Carbonsäuren Essigsäure sind.

## Revendications

**1.** Fibre céramique qui est une structure de fibre constituée d'un ou plusieurs éléments parmi l' $Al_2O_3$, le $SiO_2$ et le $TiO_2$ et a un diamètre de fibre moyen de 50 à 1 000 nm, une longueur de fibre de 100 $\mu$m ou plus, et une superficie spécifique BET de 0,1 à 3 $m^2$/g.

**2.** Fibre céramique selon la revendication 1, comprenant de l'oxyde d'aluminium dans une quantité de 20 à 100 % en poids exprimée en termes d'$Al_2O_3$.

**3.** Fibre céramique selon la revendication 1, constituée d'une céramique comprenant de l'oxyde de titane.

**4.** Fibre céramique selon la revendication 3, dans laquelle l'oxyde de titane est constitué de cristal de type anatase.

**5.** Fibre céramique selon la revendication 4, dans laquelle le rapport des teneurs isotopiques du cristal de type anatase et du cristal de type rutile dans une fibre céramique ayant été soumise à un tel traitement sous air, atmosphère, en augmentant la température atmosphérique de 20°C à 800°C à une vitesse d'augmentation de la température de 1,3°C/min, en maintenant la température à 800°C pendant deux heures, et ensuite en baissant la température de 800°C à 20°C à une vitesse de diminution de température de 1,3°C/min, est représenté de telle sorte que le pic d'intensité pour le cristal de type rutile à $2\theta = 27\text{-}28°$ soit de 0 à 10 quand le pic d'intensité pour le cristal de type anatase à $2\theta = 25\text{-}26°$ est défini comme étant de 100, dans le modèle de diffraction de rayons X correspondant.

**6.** Fibre céramique selon la revendication 4, dans laquelle la taille de cristallite du cristal de type anatase est de 100 à 300 nm.

**7.** Méthode de production d'une fibre céramique décrite dans la revendication 2, comprenant les étapes consistant à dissoudre un soluté formant une fibre dans une solution aqueuse comprenant un chlorure d'aluminium soluble dans l'eau, à filer une fibre provenant de la solution aqueuse comprenant le soluté formant la fibre par une méthode d'électro-filature, en obtenant une structure de fibre accumulée sur un substrat de collecte par la filature de fibre, et à brûler la structure de fibre accumulée.

**8.** Méthode de production d'une fibre céramique comme décrite dans la revendication 7, dans laquelle le soluté formant une fibre est un polymère organique ayant une masse moléculaire de 10 000 à 10 000 000.

**9.** Méthode de production d'une fibre céramique selon la revendication 8, dans laquelle le polymère organique est un polyéthylène glycol.

**10.** Méthode de production d'une fibre céramique selon la revendication 7, dans laquelle la solution aqueuse comprenant le chlorure d'aluminium soluble dans l'eau comprend en outre un composé de silicium soluble dans l'eau.

**11.** Méthode de production d'une fibre céramique selon la revendication 10, dans laquelle le composé de silicium soluble dans l'eau est un composé obtenu en hydrolysant partiellement le silicate d'alkyle.

**12.** Méthode de production d'une fibre céramique décrite dans la revendication 3, comprenant les étapes consistant à produire une solution composée d'un mélange d'un composé qui forme un complexe avec un titane d'alkyle et d'un titane d'alkyle, l'eau et un soluté formant une fibre, à filer une fibre provenant de la solution par une méthode d'électro-filature, à accumuler une structure de fibre obtenue par la filature de fibre, et à brûler la structure de fibre accumulée.

**13.** Méthode de production d'une fibre céramique selon la revendication 12, dans laquelle l'étape de production de la solution est une étape de production d'une solution, en dissociant un gel généré par la réaction du mélange d'un composé qui forme un complexe avec un titanate d'alkyle et d'un titanate d'alkyle avec de l'eau.

**14.** Méthode de production d'une fibre de céramique selon la revendication 12, dans laquelle le soluté formant une fibre est un polymère organique.

**15.** Méthode de production d'une fibre de céramique selon la revendication 14, dans laquelle le polymère organique est un polyéthylène glycol.

**16.** Méthode de production d'une fibre de céramique selon la revendication 12, dans laquelle le composé qui forme un complexe avec un titanate d'alkyle est constitué d'acides carboxyliques.

**17.** Méthode de production d'une fibre de céramique selon la revendication 16, dans laquelle les acides carboxyliques sont l'acide acétique.

Fig. 1

Fig. 2

F i g . 3

F i g .  4

Fig. 5

F.i g . 6

F i g . 7

Fig. 8

F i g. 9

F i g .  1 0

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2003105658 A
- JP 2002249966 A
- JP 2003073964 A
- US 4320 A
- US 074 A

### Non-patent literature cited in the description

- Direct Fabrication of Composite and Ceramic Hollow Nanofibers by Electrospinning. **Dan Li ; Younan Xia.** Nano Letters. The American Chemical Society, May 2004, vol. 4, 933-938
- **Mi Yeon Song ; Do Kyun Kim ; Kyo Jin Ihn ; Seong Mu Jo ; Dong Young Kim.** Electrospun TiO2 electrodes for dye-sensitized solar cells. *Nanotechnology,* December 2004, vol. 15 (12), 1861-1865